# EUROPÄISCHE PATENTSCHRIFT

(11) **EP 1 839 017 B1**
(45) Veröffentlichungstag und Bekanntmachung des Hinweises auf die Patenterteilung: **24.10.2018**
(21) Anmeldenummer: 05821753.0
(22) Anmeldetag: 16.12.2005
(51) Int. Cl.: G01F 25/00, G01F 23/284, G01F 23/296

(54) **VERFAHREN ZUR ÜBERPRÜFUNG DER ORDNUNGSGEMÄßEN FUNKTION EINES FÜLLSTANDMESSGERÄTS**
METHOD FOR CHECKING THE PROPER FUNCTIONING OF A LEVEL INDICATOR
PROCEDE POUR VERIFIER LE BON FONCTIONNEMENT D'UN DISPOSITIF DE MESURE DE NIVEAU DE REMPLISSAGE

(30) Priorität: 21.01.2005 DE 102005003152
(43) Veröffentlichungstag der Anmeldung: 03.10.2007
(73) Patentinhaber: Endress+Hauser SE+Co. KG, 79689 Maulburg (DE)
(72) Erfinder: HAMMER, Manfred, 79664 Wehr (DE); SCHROTH, Herbert, 79650 Schopfheim (DE); MAYR, Andreas, 79539 Lörrach (DE)
(74) Vertreter: Andres, Angelika Maria
(86) Internationale Anmeldenummer: PCT/EP2005/056857
(87) Internationale Veröffentlichungsnummer: WO 2006/076997

(56) Entgegenhaltungen:
- EP-A- 0 670 048
- EP-A- 0 961 106
- EP-A- 1 039 273

## Beschreibung

Die Erfindung betrifft ein Verfahren zur Überprüfung der ordnungsgemäßen Funktion eines Füllstandmessgeräts, das den Füllstand eines Füllguts in einem Behälter bestimmt, wobei Messsignale ausgesendet werden, wobei die Messsignale an einer Oberfläche reflektiert werden und wobei anhand der Laufzeit der Messsignale eine Abstandsbestimmung durchgeführt wird. Bei den Messsignalen handelt es sich bevorzugt um Ultraschallsignale oder um Mikrowellensignale.

Laufzeitverfahren nutzen die physikalische Gesetzmäßigkeit aus, wonach die Laufstrecke gleich dem Produkt aus Laufzeit und Ausbreitungsgeschwindigkeit ist. Im Falle der Füllstandmessung entspricht die Laufstrecke dem doppelten Abstand zwischen einem Referenzpunkt des Senders und der Oberfläche des Füllguts. Das Nutzechosignal, also das an der Oberfläche des Füllguts reflektierte Signal, und dessen Laufzeit werden bevorzugt anhand der sog. Echokurve bestimmt, die in analoger oder digitalisierter Form die Amplituden der Echosignale als Funktion des Abstandes vom Sender wiedergibt. Der Füllstand selbst ergibt sich dann aus der Differenz zwischen dem bekannten Abstand des Referenzpunktes des Senders zum Boden des Behälters und dem durch die Messung bestimmten Abstand der Oberfläche des Füllguts zu dem Referenzpunkt des Senders.

Es können alle bekannten Verfahren angewendet werden, die es ermöglichen, verhältnismäßig kurze Entfernungen mittels reflektierter Messsignale zu bestimmen. Handelt es sich bei den Messsignalen um Mikrowellen, so kann sowohl das Pulsradar als auch das Frequenzmodulations-Dauerstrichradar (FMCW-Radar) zum Einsatz kommen. Mikrowellenmeßgeräte, bei denen gepulste Messsignale frei abgestrahlt werden, werden von der Anmelderin beispielsweise unter der Bezeichnung 'MICROPILOT' vertrieben. Mikrowellenmessgeräte, die Messsignale entlang eines leitfähigen Elements in den Behälter hinein- und aus dem Behälter herausführen, werden von der Anmelderin unter der Bezeichnung 'LEVELFLEX' angeboten und vertrieben.

Ein Gerätetyp, der mit Ultraschallsignalen arbeitet, wird von der Anmelderin beispielsweise unter der Bezeichnung 'PROSONIC' angeboten und vertrieben.

Mit Füllstandmessgeräten, die den Füllstand eines Mediums in einem Behälter über die Laufzeit von Messsignalen bestimmen, wird eine Messgenauigkeit im Millimeterbereich erreicht. Abgesehen von der Bereitstellung von hoch genauen Messwerten werden Laufzeit- Füllstandmessgeräte auch in zunehmendem Maße zur Messwertgewinnung in Bereichen eingesetzt, die sehr hohe Sicherheitsanforderungen erfüllen müssen. Beispielhaft seien an dieser Stelle Messgeräte genannt, die die Anforderungen an funktionale Sicherheit nach IEC 61508 erfüllen oder als Überfüllsicherung nach dem deutschen Wasserhaushaltsgesetz (WHG) dienen.

Um bei derart kritischen Anwendungen sicherzustellen, dass das Messgerät als solches überhaupt zuverlässig funktioniert, sind wiederkehrende Überprüfungen der Funktionstüchtigkeit des Messgeräts zwingend vorgeschrieben. Insbesondere muss regelmäßig überprüft werden, ob das Messgerät im Falle der Verwendung als Überfüllsicherung bei einem maximal zulässigen Füllstand oder im Falle der Verwendung als Leerlaufschutz bei einem minimal zulässigen Füllstand einen korrekten Messwert liefert.

Bei der bislang praktizierten Überprüfung des Messgeräts wird in regelmäßigen Abständen ein bestimmter Füllstand des Füllguts in dem Behälter - im genannten Fall der maximal oder der minimal zulässige Füllstand - angefahren. Dabei wird überprüft, ob die Messkette ordnungsgemäß funktioniert, also beispielsweise den geforderten Alarm auslöst. Füllstandmessgeräte werden heutzutage in Behältern mit Höhen bis zu 30m eingesetzt. Zieht man die Größe der zu überwachenden Behälter in Betracht, so lässt sich leicht abschätzen, dass dieses bekannte und praktizierte Verfahren sehr aufwändig und folglich teuer ist. Besonders störend ist, dass zur Durchführung des bekannten Testverfahrens der laufende Prozess für die Dauer der Überprüfung unterbrochen werden muss.

Derartige Verfahren sind in der EP 0 670 048 B1, in der EP 0 961 106 A1 oder in der EP 1 039 273 A2 beschrieben.

Der Erfindung liegt die Aufgabe zugrunde, ein Prüfverfahren für ein nach dem Laufzeitprinzip arbeitendes Füllstandmessgerät vorzuschlagen, bei dem der Füllstand nicht variiert werden muß.

Diese Aufgabe wird durch ein Verfahren mit den im Anspruch 1 eingegebenen Schritten gelöst. Bevorzugte Ausführungsformen ergeben sich aus den Unteransprüchen.

Gemäß einer vorteilhaften Weiterbildung des erfindungsgemäßen Verfahrens wird anhand des aktuellen Nutzechosignals ein Erwartungswert für die Qualität des Nutzechosignals bei zumindest einem vorgegebenen Füllstand ermittelt, wobei der vorgegebene Füllstand oberhalb des aktuellen Füllstands liegt. In diesem Fall lässt sich also eine klare Aussage darüber treffen, ob das Füllstandmessgerät z.B. seine Aufgabe als Überfüllsicherung entsprechend dem jeweils vorgeschriebenen Sicherheitsstandard erfüllen kann.

Wird hingegen das Füllstandmessgerät additiv oder alternativ als Leerlaufschutz eingesetzt, so sieht eine Ausgestaltung des erfindungsgemäßen Verfahrens vor, dass eine Soll-Messwertkurve bei leerem oder nahezu leerem Behälter aufgenommen wird und dass anhand des aktuellen Nutzechosignals ein Erwartungswert für die Qualität des Nutzechosignals unter Berücksichtigung der Soll-Messwertkurve bei zumindest einem vorgegebenen Füllstand ermittelt wird, wobei der vorgegebene Füllstand unterhalb des aktuellen Füllstands liegt.

Bevorzugt wird der Erwartungswert für die Qualität des Nutzechosignals bei einem maximal in dem Behälter zulässigen Füllstand ermittelt; der ermittelte Erwartungswert für die Qualität des Nutzechosignals wird anschließend mit dem für den maximal in dem Behälter zulässigen Füllstand vorgegebenen kritischen Erwartungswert verglichen.

Bevorzugt wird der Erwartungswert für die Qualität des Nutzechosignals anhand der Signalamplitude des aktuellen Nutzechosignals und anhand einer unter vorgegebenen prozess- und/oder systemabhängigen Bedingungen ermittelten Idealechokurve bestimmt. Die Idealechokurve eines Füllstand-messgeräts beschreibt die Echoamplitude als Funktion des Abstands vom Sender, die unter idealen Bedingungen erreicht wird. Hier wird also angenommen, dass das Füllgut einen idealen Reflektor darstellt. Bei freigestrahlten Signalen nimmt die Echoamplitude über die Entfernung hauptsächlich deshalb ab, weil die in einen durch die Richtcharakteristik bestimmten Raumwinkelbereich gestrahlte Leistung sich auf eine zunehmende Fläche verteilt. Bei durch einen Wellenleiter geführten Signalen wird die Idealechokurve hauptsächlich durch die Dämpfung des Wellenleiters bestimmt. Übrigens wird als Erwartungswert für die Qualität des Nutzecho-signals bevorzugt das Signal-/Rauschverhältnis herangezogen.

Als besonders vorteilhaft wird es im Zusammenhang mit dem erfindungsgemäßen Verfahren erachtet, wenn anhand des aktuellen Nutzechosignals das Signal-/Rauschverhältnis bei dem größeren bzw. dem in dem Behälter maximal zulässigen Füllstand ermittelt wird, und dass als vorgegebener kritischer Erwartungswert ein minimales, für eine Auswertung erforderliches Signal-/Rauschverhältnis bei dem größeren bzw. bei dem in dem Behälter maximal zulässigen Füllstand herangezogen wird. Eine analoge Vorgehensweise wird bei Verwendung des Füllstandmessgeräts als Leerlaufschutz vorgeschlagen.

Darüber hinaus ist vorgesehen, dass die zu unterschiedlichen Zeitpunkten ermittelten Erwartungswerte für die Qualität des Nutzechosignals aufgezeichnet werden und dass in vorgegebenen Abständen zu Diagnosezwecken überprüft wird, ob sich die ermittelten Erwartungswerte über die Zeit ändern. Eine Änderung der ermittelten Erwartungswerte lässt den Schluss auf eine sich anbahnende Fehlfunktion des Füllstandmessgeräts frühzeitig erkennen. Anhand der Änderungsrate lässt sich eine Voraussage treffen, wann die sich anbahnende Fehlfunktion dazu führt, dass das Füllstandmessgerät für seinen bestimmungsgemäßen Gebrauch nicht mehr verwendet werden kann.

Die Erfindung wird anhand der nachfolgenden Figuren näher erläutert. Es zeigt:

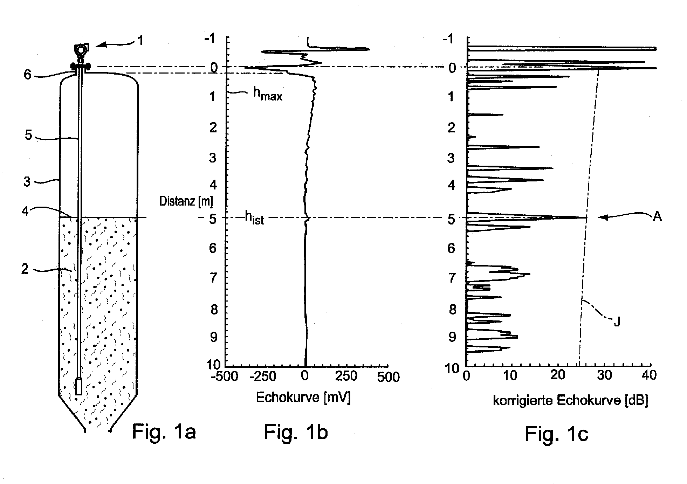

Fig. 1: eine schematische Darstellung zur Verdeutlichung des erfindungs-gemäßen Verfahrens,
   a) ein an einem Behälter angebrachtes Füllstandmessgerät, das nach dem Laufzeitprinzip arbeitet,
   b) eine Darstellung der Messwertkurve, die von dem in Fig. 1a) dargestellten Füllstandmessgerät erzeugt wird,
   c) eine Darstellung der entsprechend dem erfindungsgemäßen Verfahren korrigierten Messwertkurve,
Fig. 2: ein Flussdiagramm, das das erfmdungsgemäße Verfahren im Falle des Einsatzes des Füllstandmessgeräts als Überfüllsicherung darstellt, und
Fig. 3: ein Flussdiagramm, das das erfmdungsgemäße Verfahren im Falle des Einsatzes des Füllstandmessgeräts als Leerlaufschutz darstellt

In Fig. 1 ist in drei verschiedenen Darstellungen das erfindungsgemäße Verfahren verdeutlicht. Fig. 1a zeigt ein an dem Behälter 3 angebrachtes Füllstandmessgerät 1, das nach dem Laufzeitprinzip arbeitet. Im gezeigten Fall handelt es sich um ein sog. TDR-Messgerät 1, bei dem die hochfrequenten Messsignale entlang eines leitfähigen Elements 5 in den Behälter 3 hineingeführt bzw. aus dem Behälter 3 herausgeführt werden. In Fig. 1b ist die entsprechende von dem in Fig. 1a gezeigten Füllstandmessgerät 1 aufgezeichnete Messwertkurve, die sog. Rohechokurve, zu sehen. Bei der in Fig. 1c dargestellten Echokurve Messwertkurve handelt es sich um die Messwertkurve, die über das erfindungsgemäße Verfahren gewonnen wird.

Als Referenzpunkt für die Laufzeitmessung eignet sich beispielsweise der sogenannte Leckimpuls bei - 0,6 m Distanz, der durch Übersprechen des Sendesignals direkt beim Senden in den Empfänger entsteht und invariant im Hinblick auf die Art des Füllguts 2 und den jeweiligen Füllstand des Füllguts 2 in dem Behälter 3 ist. Die Störsignale zwischen 0 m und 1 m Distanz werden durch Reflektionen der Messsignale im Bereich des Stutzens 6 verursacht. Üblicherweise werden diese Störechosignale als 'Klingeln' bezeichnet.

Das Nutzechosignal tritt in den Figuren Fig. 1b und Fig. 1c an der Oberfläche 4 des Füllguts 2 in dem Behälter 3 auf. Im dargestellten Fall ist das Nutzechosignal stärker ausgeprägt als die links und rechts von ihm auftretenden Störechosignale. Diese Störechosignale werden beispielsweise durch Anbackungen des Füllguts an dem leitfähigen Element 5 verursacht.

Die in Fig. 1c gezeigte Messwertkurve wurde durch Subtraktion der Leerechokurve von der aktuellen Messwertkurve korrigiert und zur einfacheren Bewertung nachfolgend logarithmiert. Selbstverständlich können anstelle der zuvor beschriebenen Signalaufbereitung auch andere Arten der Signalaufbereitung verwendet werden, wie beispielsweise die Korrelation oder die Echoverfolgung. Zur Berechung des Erwartungswertes der Nutzechoamplitude wird im dargestellten Fall die Idealechokurve J verwendet, die systemabhängig ist. Diese durch das System vorgegebene Idealechokurve wird parallel so verschoben, dass sie durch das Maximum der Amplitude des Nutzechosignals verläuft. Wie bereits gesagt, hat jeder Typ eines Füllstandmessgeräts eine ihm eigene systemabhängige Idealechokurve. Bei einem freiabstrahlenden Mikrowellen-Füllstandmessgeräts hat der Antennendurchmesser einen starken Einfluss auf die Idealechokurve. Im Falle eines Ultraschall-Füllstandmessgeräts wird die Idealechokurve ggf. stark von dem Staubanteil in der Behälteratmosphäre beeinflusst.

Bei dem in Fig. 1c dargestellten Fall erhält man einen gerade noch akzeptablen Erwartungswert für das Signal-/Rauschverhältnis S/N im Messbereich oberhalb des aktuellen Füllstands hist. Hierzu wird bevorzugt ein Algorithmus zur Echofindung eingesetzt, der Echosignale größerer Amplitude unter Berücksichtung der Signaldämpfung des Füllstandmessgeräts 1 stärker bewertet. Konsequenter Weise muss bei der Signalbewertung auch der jeweils angewandte Auswertealgorithmus berücksichtigt werden. In Fig. 1c reichen die Störechosignale bis ca. 8 dB an die Dämpfungskurve J heran. Dieser Abstand wird gerade noch als ausreichend bewertet. Würde er sich bei nachfolgenden Messungen weiter verkleinern, so würde eine Fehlermeldung ausgegeben.

Anhand nachfolgend aufgenommener Messwertkurven lässt sich weiterhin oder additiv ermitteln, ob die Messwertkurven eine tendenzielle Änderung erfahren. Diese Information kann beispielsweise zur Erkennung einer schleichenden Ansatzbildung an dem leitfähigen Element 5 herangezogen werden. Von großer Wichtigkeit ist der Einsatz des erfindungsgemäßen Verfahrens darüber hinaus, wenn sich das Füllgut als solches ändert. So ist es allgemein bekannt, dass die Amplitude des Nutzechosignals nicht nur von der Laufstrecke sondern bei hochfrequenten Messsignalen auch relativ stark von den dielektrischen Eigenschaften des Füllguts beeinflusst wird. Auch für einen solchen Fall lässt sich die ordnungsgemäße Funktion des Füllstandmessgeräts nach dem erfindungsgemäßen Verfahren problemlos überprüfen.

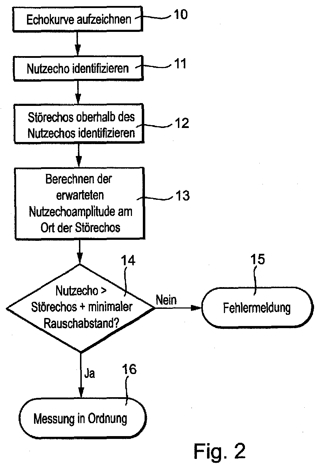

In Fig. 2 ist ein Flussdiagramm zu sehen, das das erfindungsgemäße Verfahren im Falle des Einsatzes des Füllstandmessgeräts 1 als Überfüllsicherung während eines Bearbeitungszyklus' darstellt. Es versteht sich von selbst, dass jeder beliebig vorgegebene Füllstand mittels des erfindungsgemäßen Verfahrens überwacht werden kann. Unter dem Programmpunkt 10 wird die Messwertkurve aufgezeichnet. In der Messwertkurve wird das Nutzechosignal (Punkt 11) identifiziert. Anschließend werden die Störechosignale oberhalb des Nutzechosignals identifiziert. Bei dem Programmpunkt 13 wird die Echoamplitude des Nutzechosignals am Ort eines Störechosignals berechnet. Anschließend wird bei dem Verzweigungspunkt 14 geprüft, ob das Nutzechosignal größer ist als die Summe von Störechosignal und minimalem Rauschabstand. Ist diese Bedingung nicht erfüllt, so wird bei dem Programm-punkt 15 eine Fehlermeldung generiert und ausgegeben. Ist die zuvor genannte Bedingung erfüllt, so ist dies der geforderte Nachweis für die Funktionstüchtigkeit des Füllstandmessgeräts 1.

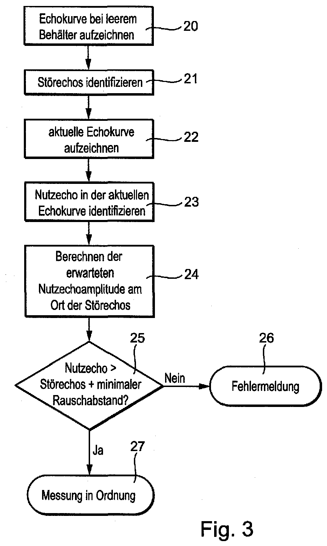

Fig. 3 zeigt ein Flussdiagramm, das das erfindungsgemäße Verfahren im Falle des Einsatzes des Füllstandmessgeräts 1 als z.B. Pumpenleerlaufschutz beschreibt. Unter dem Programmpunkt 20 wird die Messwertkurve bei leerem Behälter 3 aufgezeichnet; anschließend werden anhand der Leerechokurve die systemabhängigen Störechosignale identifiziert. Unter dem Programmpunkt 22 wird zu einem späteren Zeitpunkt die aktuelle Messwertkurve bei einem Füllstand hist aufgenommen. Das Nutzechosignal wird unter Punkt 23 in der aktuellen Messwertkurve - ggf. unter Heranziehen der systemabhängigen Störechosignale - identifiziert. Anschließend wird die unter den gegebenen Bedingungen zu erwartende Amplitude des Nutzechosignals am Ort des Störechosignals, z.B. des größten Störechosignals, berechnet. Anschließend wird bei dem Verzweigungspunkt 25 geprüft, ob die Amplitude des Nutzechosignals größer ist als die Summe des Störechosignals und des minimalen Rauschabstands. Ist diese Bedingung nicht erfüllt, so wird bei dem Programmpunkt 26 eine Fehlermeldung generiert und ausgegeben. Ist die zuvor genannte Bedingung erfüllt, so ist dies als Nachweis für die Funktionstüchtigkeit des Füllstandmessgeräts 1 zu werten.

Bevorzugt wird das erfindungsgemäße Verfahren automatisiert ausgeführt durch eine Funktion der Gerätesoftware. Alternativ ist aber auch eine manuelle Ausführung durch einen Bediener möglich unter Zuhilfenahme einer graphischen Darstellung der Echo Messwertkurve beispielsweise auf einem Gerätedisplay, Oszillographenschirm oder Computermonitor. Bei einer automatisierten Ausführung wird eine etwaige Fehlfunktion bevorzugt durch eine Fehlermeldung des Signalausgangs des Messgeräts signalisiert, bei einer manuellen Ausführung liegt eine solche Fehlermeldung selbstverständlich nicht vor.

In manchen Fällen ist es von Vorteil, als Messwertkurve nicht eine Echokurve auszuwerten, die die Amplitude der reflektierten Signale als Funktion des Abstands darstellt, sondern eine andere Art von Messwertkurve. Beispielsweise kann durch sukzessives Vergrößern der Verstärkung im Signalverarbeitungszweig festgestellt werden, wann ein Nutzecho einen Schwellenwert überschreitet und durch weiteres Vergrößern der Verstärkung, wann zusätzlich ein oder mehrere Störechos diese Schwelle überschreiten. In diesem Beispiel wird die Messwertkurve durch die Tupel aus Distanz der Echos und die dazugehörige Verstärkung gebildet. In einem weiteren Beispiel wird als Messwertkurve ebenfalls nicht die Echokurve verwendet, sondern das Zwischenfrequenzsignal beim FMCW-Radar. Dieses Signal stellt eine Überlagerung von Sinusschwingungen dar, wobei jeder Frequenz ein Abstand zugeordnet werden kann. Durch frequenzselektive Filterung können dann Nutzechosignale von Störechosignalen getrennt werden.

Eine erste typische Ursache für einen Fehlerzustand eines Füllstandmessgeräts nach dem Laufzeitverfahren sind schlechte Reflexionseigenschaften des Mediums 2, die durch eine geringe Dielektrizitätskonstante des Mediums 2 bei hochfrequenten Messsignalen bzw. eine geringe Dichte des Mediums 2 bei Ultraschallsignalen hervorgerufen werden können und/oder durch unruhige Oberflächen, Wellenbildung, Siedeblasen, Schaumbildung, Schüttkegel und/oder spiegelnde Reflexion zur Seite.

Eine weitere typische Ursache für einen Fehlerzustand sind starke Störechos durch Einbauten im Behälter, Stutzen, oder Anbackungen am Füllstandmessgerät selbst oder Teilen des Behälters.

Eine dritte typische Ursache für einen Fehlerzustand sind Defekte der Sensorik, beispielsweise hervorgerufen durch Alterung, eingedrungenes Medium, Vibration und/ oder extreme Temperaturen.

Bei der Anwendung des erfindungsgemäßen Verfahrens kann in vielen Fällen sogar eine Ursache für den Fehlerzustand diagnostiziert werden, die oben genannte erste Ursache eines Fehlerzustands zeigt sich durch eine geringe Amplitude des Nutzsignals, die zweite Ursache durch eine große Amplitude der Störsignale. Die dritte Ursache kann sowohl große Störsignale als auch geringe Nutzsignale mit sich bringen, man kann sie in der Regel von den ersten beiden Ursachen durch die über die Zeit schlechter werdende Qualität der Messung unterscheiden.

## Patentansprüche

1. Verfahren zur Überprüfung der ordnungsgemäßen Funktion eines Füllstandmessgeräts (1), das den Füllstand eines Füllguts (2) in einem Behälter (3) bestimmt,
wobei Messsignale ausgesendet werden,
wobei die Messsignale an einer Oberfläche (4) reflektiert werden,
wobei anhand der Laufzeit der Messsignale eine Abstandsbestimmung durchgeführt wird,
wobeiin vorgegebenen oder wählbaren zeitlichen Abständen (ta) eine Messwertkurve bei einem aktuellen Füllstand (hist) ermittelt wird, dass anhand der aktuellen Messwertkurve ein aktuelles Nutzechosignal ermittelt wird, **dadurch gekennzeichnet,**
**dass** anhand des aktuellen Nutzechosignals ein Erwartungswert (E) für die Qualität des Nutzechosignals bei einem beliebig vorgegebenen Füllstand (hsoll) ermittelt wird,
**dass** der Erwartungswert anhand der Signalamplitude (A) des aktuellen Nutzechosignals und anhand einer unter vorgegebenen prozess- und/oder systemabhängigen Bedingungen ermittelten Idealechokurve (J), die der Signalamplitude (A) eines idealen Reflektors unter idealen Bedingungen als Funktion des Abstands entspricht, bestimmt wird,
**dass** als Erwartungswert für die Qualität des Nutzechosignals (E) bei dem beliebig vorgegebenen Füllstand (hsoll) ein Signal-/Rauschverhältnis (S/N) herangezogen wird,
**dass** der ermittelte Erwartungswert (E) für die Qualität des Nutzechosignals bei dem vorgegebenen Füllstand (hsoll) mit einem vorgegebenen kritischen Erwartungswert für die Qualität verglichen wird,
und
**dass** ein Fehlerzustand diagnostiziert wird, wenn der ermittelte Erwartungswert den kritischen Erwartungswert für die Qualität unterschreitet.

2. Verfahren nach Anspruch 1,
**dadurch gekennzeichnet, dass** anhand des aktuellen Nutzechosignals ein Erwartungswert (E) für die Qualität des Nutzechosignals bei zumindest einem vorgegebenen Füllstand (hsoll) ermittelt wird,
wobei für den Fall, dass das Füllstandsmessgerät als Überfüllsicherung eingesetzt wird, der zumindest eine vorgegebene Füllstand (hsoll) oberhalb des aktuellen Füllstands (hist) liegt.

3. Verfahren nach Anspruch 1 oder 2,
**dadurch gekennzeichnet, dass** eine Soll-Messwertkurve bei leerem oder nahezu leerem Behälter (3) aufgenommen wird,
und dass für den Fall, dass das Füllstandsmessgerät als ein Leerlaufschutz eingesetzt wird, anhand des aktuellen Nutzechosignals ein Erwartungswert
(E) für die Qualität des Nutzechosignals unter Berücksichtigung der aufgenommenen Soll-Messwertkurve bei zumindest einem vorgegebenen Füllstand (hsoll) ermittelt wird, wobei der zumindest eine vorgegebene Füllstand (hsoll) unterhalb des aktuellen Füllstands (hist) liegt.

4. Verfahren nach Anspruch 1 oder 2,
**dadurch gekennzeichnet,**
**dass** der Erwartungswert (E) für die Qualität des Nutzechosignals bei einem maximal in dem Behälter (3) zulässigen Füllstand (hmax) ermittelt wird und dass der ermittelte Erwartungswert (E) für die Qualität des Nutzechosignals mit dem für den maximal in dem Behälter (3) zulässigen Füllstand (hmax) vorgegebenen kritischen Erwartungswert (Ekrit) verglichen wird.

5. Verfahren nach Anspruch 1 oder 4,
**dadurch gekennzeichnet,**
**dass** anhand des aktuellen Nutzechosignals ein Signal-/Rauschverhältnis (S/N (hmax)) bei dem größeren bzw. dem in dem Behälter (3) maximal zulässigen Füllstand (hmax) ermittelt wird, und
**dass** als vorgegebener kritischer Erwartungswert (Ekrit) ein minimales, für eine Auswertung erforderliches Signal-/Rauschverhältnis (S/N) bei dem größeren bzw. bei dem in dem Behälter (3) maximal zulässigen Füllstand (hmax) herangezogen wird.

6. Verfahren nach einem oder mehreren der vorhergehenden Ansprüche, **dadurch gekennzeichnet,**
**dass** die zu unterschiedlichen Zeitpunkten ermittelten Erwartungswerte (E(t), E(t1)) für die Qualität des Nutzechosignals aufgezeichnet werden und
**dass** in vorgegebenen Abständen zu Diagnosezwecken überprüft wird, ob sich die ermittelten Erwartungswerte (E(t), E(t1)) über die Zeit ändern.

## Claims

1. Procedure designed to verify the correct functioning of a level measuring device (1),which determines the level of a medium (2) in a vessel (3),
wherein measuring signals are transmitted,
wherein the measuring signals are reflected at a surface (4),
wherein a distance is determined using the time of flight of the measuring signals, wherein, at predefined or selectable intervals (ta), a measured value curve is determined at a current level (hist), wherein a current useful echo signal is determined using the current measured value curve,
**characterized in that**
on the basis of the current useful echo signal, an expected value (E) for the quality of the useful echo signal at an arbitrary predefined level (hsoll) is determined,
**in that** the expected value is determined using the signal amplitude (A) of the current useful echo signal and using an ideal echo curve (J) determined under conditions that depend on the process and/or system, said ideal echo curve corresponding to the signal amplitude (A) of an ideal reflector, under ideal conditions, as a function of the distance,
**in that** a signal-to-noise ratio (S/N) is used as the expected value for the quality of the useful echo signal (E) at the arbitrary predefined level (hsoll),
**in that** the expected value (E) determined for the quality of the useful echo signal at the predefined level (hsoll) is compared against a predefined critical expected value for the quality,
and
**in that** a fault condition is diagnosed if the determined expected value drops below the critical expected value for the quality.

2. Procedure as claimed in Claim 1,
**characterized in that**
on the basis of the current useful echo signal, an expected value (E) for the quality of the useful echo signal at at least one predefined level (hsoll) is determined,
wherein, if the level measuring device is used for overfill protection, the at least one predefined level (hsoll) is located above the current level (hist).

3. Procedure as claimed in Claim 1 or 2,
**characterized in that**
a target measured value curve is recorded for an empty or almost empty tank (3), and, where the level measuring device is used for dry running protection, an expected value (E) for the quality of the useful echo signal is determined using the current useful echo signal, taking into account the recorded target measured value curve at at least one predefined level (hsoll), wherein the at least one predefined level (hsoll) is located below the current level (hist).

4. Procedure as claimed in Claim 1 or 2,
**characterized in that**
the expected value (E) for the quality of the useful echo signal at a maximum permitted level (hmax) in the tank (3) is determined and **in that** the expected value (E) determined for the quality of the useful echo signal is compared with the predefined critical expected value (Ekrit) for the maximum permitted level (hmax) in the tank (3).

5. Procedure as claimed in Claim 1 or 4,
**characterized in that**
a signal-to-noise ratio (S/N hmax)) at the higher level and/or maximum permissible level (hmax) in the tank (3) is determined using the current useful echo signal, and
**in that** a minimum signal-to-noise ratio (S/N), which is required for evaluation, at the higher level and/or maximum permissible level (hmax) in the tank (3) is used as the predefined critical expected value (Ekrit).

6. Procedure as claimed in one or more of the previous claims,
**characterized in that**
the expected values (E(t), E(t1)) for the quality of the useful echo signal, which are determined at different times, are recorded and **in that** a check is performed at predefined intervals for diagnostic purposes to determine whether the determined expected values (E(t), E(t1)) change over time.

## Revendications

1. Procédé destiné à la vérification du bon fonctionnement d'un transmetteur de niveau (1), lequel détermine le niveau d'un produit (2) au sein d'un réservoir (3),
des signaux de mesure étant émis,
les signaux de mesure étant réfléchis sur une surface (4),
une détermination de distance étant effectuée sur la base du temps de propagation des signaux de mesure,
une courbe de valeurs de mesure étant déterminée pour un niveau actuel (hist) à des intervalles de temps (ta) prédéfinis ou sélectionnables, un signal d'écho utile actuel étant déterminé au moyen de la courbe de valeurs de mesure actuelle, **caractérisé**
**en ce qu'**est déterminée, sur la base du signal d'écho utile actuel, une valeur attendue (E) pour la qualité du signal d'écho utile à un niveau prédéfini (hsoll) quelconque,
**en ce que** la valeur attendue est déterminée au moyen de l'amplitude (A) du signal d'écho utile actuel et au moyen d'une courbe d'écho idéale (J) déterminée dans des conditions de process prédéfinies et/ou dépendantes du système, laquelle courbe correspond à l'amplitude de signal (A) d'un réflecteur idéal, dans des conditions idéales, en tant que fonction de la distance,
**en ce qu'**il est fait appel - en tant que valeur attendue pour la qualité du signal d'écho utile (E) à un niveau prédéfini (hsoll) quelconque - à un rapport signal-bruit (S/N),
**en ce que** la valeur attendue (E) déterminée pour la qualité du signal d'écho utile au niveau prédéfini (hsoll) est comparée avec une valeur attendue critique prédéfinie pour la qualité,
et
**en ce qu'**est diagnostiqué un état d'erreur lorsque la valeur attendue déterminée passe sous la valeur attendue critique pour la qualité.

2. Procédé selon la revendication 1,
**caractérisé**
**en ce qu'**est déterminé, au moyen du signal d'écho utile actuel, une valeur attendue (E) pour la qualité du signal d'écho utile à au moins un niveau prédéfini (hsoll),
procédé pour lequel, pour le cas où le transmetteur de niveau est utilisé en tant que sécurité antidébordement, l'au moins un niveau prédéfini (hsoll) se situe au-dessus du niveau actuel (hist).

3. Procédé selon la revendication 1 ou 2,
**caractérisé**
**en ce qu'**est enregistrée une courbe de valeurs de mesure théorique dans le cas d'un réservoir (3) vide ou quasi vide,
et **en ce que**, pour le cas où le transmetteur de niveau est utilisé en tant que protection contre la marche à vide, une valeur attendue (E) pour la qualité du signal d'écho utile est déterminée à au moins un niveau prédéfini (hsoll) au moyen du signal d'écho actuel, en tenant compte de la courbe de valeurs de mesure théorique enregistrée, l'au moins un niveau prédéfini (hsoll) se situant au-dessous du niveau actuel (hist).

4. Procédé selon la revendication 1 ou 2,
**caractérisé**
**en ce que** la valeur attendue (E) pour la qualité du signal d'écho utile à un niveau maximal admissible (hmax) dans le réservoir (3) est déterminée et en ce que la valeur attendue (E) déterminée pour la qualité du signal d'écho utile est comparée avec la valeur attendue critique (Ekrit) prédéfinie au niveau maximal admissible (hmax) dans le réservoir (3).

5. Procédé selon la revendication 1 ou 4,
**caractérisé**
**en ce qu'**est déterminé, au moyen du signal d'écho utile, un rapport signal-bruit (S/N hmax)) pour le niveau supérieur ou le niveau maximal admissible (hmax) dans le réservoir (3), et
**en ce qu'**il est fait appel, en tant que valeur attendue critique (Ekrit) prédéfinie, à un rapport signal-bruit (S/N) minimal, nécessaire pour une interprétation, au niveau supérieur ou au niveau maximal admissible (hmax) dans le réservoir (3).

6. Procédé selon l'une ou plusieurs des revendications précédentes,
**caractérisé**
**en ce que** les valeurs attendues (E(t), E(t1)) déterminées à différents instants pour la qualité du signal d'écho utile sont enregistrées et en ce qu'il est vérifié, à des intervalles prédéfinis et à des fins de diagnostic, si les valeurs attendues (E(t), E(t1)) changent dans le temps.
